# EUROPÄISCHE PATENTANMELDUNG

(11) **EP 4 678 475 A1**
(43) Veröffentlichungstag der Anmeldung: **14.01.2026**
(21) Anmeldenummer: 25187467.3
(22) Anmeldetag: 04.07.2025
(51) Int. Cl.: B60Q 1/30, B60Q 1/34, B60Q 1/44, F21S 43/235, F21S 43/236, F21S 43/237, F21S 43/239, F21S 43/245, F21S 43/249, B60Q 1/00, B60Q 1/24, B60Q 1/38

(54) **RÜCKLICHTVORRICHTUNG FÜR EIN NUTZFAHRZEUG**

(30) Priorität: 09.07.2024 DE 102024119400
(71) Anmelder: HELLA GmbH & Co. KGaA, 59552 Lippstadt (DE)
(72) Erfinder: Berger, Julian, 59552 Lippstadt (DE); Fink, Georg, 89188 Merklingen (DE); Haase, Christian, 59597 Erwitte (DE); SCHÖNE, Michael, 59555 Lippstadt (DE); UTERMÖHLEN, Fabian, 59557 Lippstadt (DE)
(74) Vertreter: Behr-Wenning, Gregor

(57) **Zusammenfassung**

Die Erfindung betrifft eine Rücklichtvorrichtung (100) für ein Nutzfahrzeug (200), insbesondere einen Lastkraftwagen, Anhänger oder Sattelauflieger, welche für ein Beleuchten im Heckbereich eingerichtet ist, aufweisend:
- einen Lichtleiter (10), der dazu eingerichtet ist, im Heckbereich über die gesamte Breite eines Nutzfahrzeugs (200) angeordnet zu werden,
- eine Beleuchtungseinheit (20), die zum Beleuchten eines am Boden befindlichen Arbeitsbereichs im Heckbereich des Nutzfahrzeugs (200) eingerichtet ist.

## Beschreibung

Die Erfindung betrifft eine Rücklichtvorrichtung mit den Merkmalen des unabhängigen Vorrichtungsanspruchs und ein Nutzfahrzeug mit den Merkmalen des unabhängigen Patentanspruchs, betreffend ein Nutzfahrzeug.

Bekannt sind Nutzfahrzeuge mit einer Rücklichtvorrichtung, welche zu einem Beleuchten im Heckbereich eingerichtet sind. Die Rücklichtvorrichtung kann dabei Blinker, Bremslicht(er) und/oder Rückfahrlichter aufweisen. Bekannte Rücklichtvorrichtungen können dabei als einzelne Bauteile, z. B. für die linke oder rechte Seite des Nutzfahrzeugs, ausgestaltet sein. Es kann auch vorgesehen sein, dass ein Bereich hinter dem Nutzfahrzeug durch eine (separate) Beleuchtungseinheit erhellt wird, beispielsweise um ein Beladen und/oder Entladen bei Dunkelheit zu erleichtern.

Der Stand der Technik weist dabei Nachteile auf. So kann die Fertigung, Montage und/oder Wartung erschwert werden, insbesondere da unterschiedliche elektrische Zuleitungen und/oder Signalleitungen verlegt werden müssen, beispielsweise im unteren Bereich des Fahrzeughecks und/oder im oberen Bereich. Dabei können die Kosten erhöht sein. Die Robustheit kann optimierbar sein, insbesondere da einzelne Bauteile eine höhere Fehleranfälligkeit aufweisen können. Der Bauraum bzw. die Bautiefe kann unvorteilhaft groß sein, wodurch (viel) Bauraum beansprucht wird und/oder die Robustheit (z. B. durch abstehende Teile) reduziert wird. Die Beleuchtung kann unzureichend sein, insbesondere da die Rücklichtvorrichtungen nur einen (sehr) begrenzten Bereich abdecken. Der Verschleiß kann bei einer geringen Bautiefe und/oder einer Anbringung in Bodennähe, z. B. an der Stoßstange, erhöht sein. Zudem kann die Sicherheit, insbesondere bezüglich Diebstahls und/oder äußerer Krafteinwirkung (Vandalismus und/oder Unfälle) reduziert sein. Zudem kann die Flexibilität reduziert sein, da eine sehr spezifische Anpassung an ein bestimmtes Nutzfahrzeug, bzw. dessen Heckbereich, notwendig sein kann (beispielsweise aufgrund unterschiedlicher Form und/oder Anordnung von rückwärtigen Stoßstangen). Es kann auch vorgesehen sein, dass bei einem Defekt die ganze Rücklichtvorrichtung getauscht werden muss. Diese kann teilweise nur schwer (vom Nutzfahrzeug) lösbar sein.

Es ist daher eine Aufgabe der vorliegenden Erfindung, wenigstens einen der voranstehend beschriebenen Nachteile zumindest teilweise zu überwinden. Insbesondere ist es Aufgabe der Erfindung, eine verbesserte Rücklichtvorrichtung bereitzustellen, welche optimierte Kosten, Flexibilität, Einfachheit, Sicherheit, Robustheit, Baugröße, Umweltfreundlichkeit, Fertigung, Montage und/oder Wartung ermöglicht.

Die voranstehende Aufgabe wird gelöst durch eine Rücklichtvorrichtung mit den Merkmalen des unabhängigen Vorrichtungsanspruchs, und ein Nutzfahrzeug mit den Merkmalen des unabhängigen Patentanspruchs, betreffend ein Nutzfahrzeug. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Rücklichtvorrichtung beschrieben sind, selbstverständlich auch im Zusammenhang mit dem erfindungsgemäßen Nutzfahrzeug und jeweils umgekehrt, sodass bezüglich der Offenbarung zu den einzelnen Erfindungsaspekten stets wechselseitig Bezug genommen wird bzw. werden kann. Insbesondere gelten Vorteile, die im Rahmen des ersten und/oder zweiten Aspekts beschrieben werden, auch jeweils für den ersten und/oder zweiten Aspekt.

Die obenstehende Aufgabe wird gemäß einem ersten Aspekt gelöst durch eine Rücklichtvorrichtung für ein Nutzfahrzeug, insbesondere einen Lastkraftwagen, Anhänger oder Sattelauflieger, welche für ein Beleuchten im Heckbereich eingerichtet ist, aufweisend:
- einen, insbesondere einteilig oder mehrteilig, ausgestalteten Lichtleiter, der dazu eingerichtet ist im Heckbereich über die gesamte Breite eines Nutzfahrzeugs angeordnet zu werden, und vorzugsweise nach hinten Licht zu emittieren,
- eine Beleuchtungseinheit, die zum Beleuchten eines am Boden befindlichen Arbeitsbereichs im Heckbereich des Nutzfahrzeugs eingerichtet ist, wobei vorzugsweise Licht nach hinten und/oder unten emittiert wird.

Die Rücklichtvorrichtung kann sich bevorzugt (im montierten Zustand) über die gesamte Breite des Nutzfahrzeugs erstrecken. Dadurch kann eine besonders gute Erkennung der Abmessungen des Nutzfahrzeugs ermöglicht werden. Die Rücklichtvorrichtung kann bevorzugt im oberen Bereich und/oder ganz oben, insbesondere entlang einer Höhenrichtung des Nutzfahrzeugs und/oder der Rücklichtvorrichtung, angeordnet werden. Dadurch ist diese gut sichtbar und/oder gut geschützt. Dabei kann die Rücklichtvorrichtung oberhalb von einer im Heckbereich angeordneten Tür, Flügeltür, Klappe und/oder Ladeöffnung angeordnet werden, wobei insbesondere die Rücklichtvorrichtung eine (oder zwei) Aussparung(en) zum Öffnen und/oder Schließen (eines vorgenannten für ein Schließen eingerichteten Bauteils) aufweisen kann. Die Rücklichtvorrichtung kann in einer Ausnehmung, insbesondere einer länglichen Ausnehmung, z. B. einer Kammer und/oder Nut des Nutzfahrzeugs, insbesondere eines Kofferaufbaus des Nutzfahrzeugs, angeordnet werden. Dadurch kann diese einfach montiert werden und/oder geschützt angeordnet sein. Dabei kann die Breite der Rücklichtvorrichtung zwischen 50 cm bis 10 m, insbesondere zwischen 100 cm bis 5 m, beispielsweise zwischen 150 cm bis 3 m, vorzugsweise zwischen 200 cm bis 280 cm, besonders bevorzugt zwischen 230 cm bis 250 cm aufweisen. Eine Höhe des Lichtleiters, insbesondere entlang einer Höhenrichtung (bzw. y-Richtung) kann dabei zwischen 0,8 mm bis 100 mm, insbesondere zwischen 1 mm bis 20 mm, beispielsweise zwischen 2 mm bis 10 mm, vorzugsweise zwischen 3 mm bis 7 mm, besonders bevorzugt zwischen 4 mm bis 6 mm, idealerweise im Wesentlichen 5 mm aufweisen. Eine Höhe der Rücklichtvorrichtung, insbesondere entlang einer Höhenrichtung (bzw. y-Richtung) kann dabei zwischen 5 mm bis 100 mm, insbesondere zwischen 10 mm bis 50 mm, beispielsweise zwischen 20 mm bis 40 mm, vorzugsweise zwischen 25 mm bis 36 mm, besonders bevorzugt zwischen 28 mm bis 33 mm, idealerweise im Wesentlichen 30 mm aufweisen. Eine (Einbau-)Tiefe der Rücklichtvorrichtung, insbesondere entlang einer Fahrtrichtung, insbesondere des Nutzfahrzeugs (bzw. z-Richtung), kann dabei zwischen 2 mm bis 100 mm, insbesondere zwischen 5 mm bis 40 mm, beispielsweise zwischen 10 mm bis 30 mm, vorzugsweise zwischen 12 mm bis 28 mm, besonders bevorzugt zwischen 15 mm bis 25 mm, idealerweise im Wesentlichen 20 mm aufweisen. Dabei können die Längserstreckung, die Höhenrichtung und die Fahrtrichtung vorzugsweise ein Rechthandsystem bilden.

Vorzugsweise ist der Lichtleiter im Heckbereich über die gesamte Breite des Nutzfahrzeugs angeordnet und emittiert (in Fahrtrichtung) nach hinten Licht.

Der Lichtleiter kann einteilig ausgestaltet sein, was insbesondere die Montage erleichtert. Der Lichtleiter kann mehrteilig, insbesondere dreiteilig, ausgestaltet sein, was insbesondere eine einfache und/oder kostengünstige Fertigung und/oder Lagerung (insbesondere in einem nicht montierten Zustand) ermöglicht. Dabei kann in einem montierten Zustand der Lichtleiter zusammenhängend ausgestaltet sein. Der Lichtleiter kann sich vorzugsweise über die gesamte Breite des Nutzfahrzeugs erstrecken. Im einfachsten Fall kann ein Lichtleiter einen Lichtleitstab und/oder eine Leuchtröhre aufweisen. Ein Lichtleiter kann dabei eine oder eine Vielzahl von (elektrischen) Lampen aufweisen, beispielsweise LED(s), OLED(s), Halogenlampen und/oder Xenonlampen. Dabei können mehrere Lampen (entlang einer Längserstreckung des Lichtleiters bzw. der Rücklichtvorrichtung) nebeneinander angeordnet sein. Es kann vorgesehen sein, dass die Lampen dimmbar ausgestaltet sind und/oder die Farbe des Lichts eingestellt werden kann. Es kann vorgesehen sein, dass der Lichtleiter modular ausgestaltet ist. Dabei können mehrere Lampen nebeneinander und/oder aneinander befestigt werden. Es kann auch vorgesehen sein, dass der Lichtleiter eine Vielzahl an (nebeneinanderliegenden) Kammern aufweist, welche zur Aufnahme einer Lampe eingerichtet sind. Es kann auch vorgesehen sein, dass diese in Abhängigkeit von einem Bewegungsmelder (der integriert ist) betrieben werden. Dadurch kann beispielsweise ein sich von hinten annäherndes Fahrzeug gewarnt werden. Vorzugsweise ist der Lichtleiter für eine (über die Längsrichtung) einheitliche und/oder konstante Beleuchtung eingerichtet.

Bevorzugt weist der Lichtleiter eine integrierte Steuereinheit auf, welche insbesondere über eine Datenverbindung datenkommunizierend mit einer elektronischen Steuereinheit des Nutzfahrzeugs verbunden ist. Dadurch kann die elektronische Steuereinheit des Nutzfahrzeugs und/oder die (integrierte) Steuereinheit den Lichtleiter und/oder die Blinkleuchte(n) und/oder die Bremsleuchte(n), z. B. über ein entsprechendes Steuersignal ansteuern. Es kann auch vorgesehen sein, dass der Lichtleiter direkt mit einer Steuereinheit (des Fahrzeugs) verbunden ist, sodass diese insbesondere direkt die Beleuchtung über den Lichtleiter einstellen kann. Der Lichtleiter kann vorzugsweise über eine Steckverbindung mit einer Stromversorgung des Nutzfahrzeugs verbunden werden. Der (montierte) Lichtleiter kann entlang der Längserstreckung (von rechts nach links, bzw. entlang einer x-Richtung) eine Breite aufweisen, welche sich vorzugsweise über die gesamte Breite des Nutzfahrzeugs erstreckt. Dabei kann die Breite des (gesamten) Lichtleiters zwischen 50 cm bis 10 m, insbesondere zwischen 100 cm bis 5 m, beispielsweise zwischen 150 cm bis 3 m, vorzugsweise zwischen 200 cm bis 280 cm, besonders bevorzugt zwischen 230 cm bis 250 cm aufweisen. Dabei kann ein Lichtleiterteil entsprechend der Anzahl einen entsprechenden Bruchteil der (gesamten) Breite des Lichtleiters aufweisen, z. B. etwa 750 mm bei drei Lichtleiterteilen. Eine Höhe des Lichtleiters, insbesondere entlang einer Höhenrichtung (bzw. einer y-Richtung bzw. Vertikalen) kann dabei zwischen 0,8 mm bis 100 mm, insbesondere zwischen 1 mm bis 20 mm, beispielsweise zwischen 2 mm bis 10 mm, vorzugsweise zwischen 3 mm bis 7 mm, besonders bevorzugt zwischen 4 mm bis 6 mm, idealerweise im Wesentlichen 5 mm aufweisen. Eine (Einbau-)Tiefe der Rücklichtvorrichtung, insbesondere entlang einer Fahrtrichtung, insbesondere des Nutzfahrzeugs (bzw. z-Richtung), kann dabei zwischen 2 mm bis 100 mm, insbesondere zwischen 5 mm bis 40 mm, beispielsweise zwischen 10 mm bis 30 mm, vorzugsweise zwischen 12 mm bis 28 mm, besonders bevorzugt zwischen 15 mm bis 25 mm, idealerweise im Wesentlichen 20 mm aufweisen.

Die Beleuchtungseinheit kann für eine (gesonderte und/oder schaltbare) Beleuchtung des Heckbereichs eingerichtet sein. Beispielsweise kann eine Beleuchtung der Umgebung des Heckbereichs bereitgestellt werden, beispielsweise eines am Boden befindlichen Arbeitsbereichs. Dabei kann ein Entladen und/oder Beladen des Nutzfahrzeugs bei verbesserter Beleuchtung ermöglicht werden. Vorzugsweise kann die Beleuchtungseinheit (nur) im Stillstand des Nutzfahrzeugs und/oder (nur) beim Öffnen der Tür bzw. Klappe verwendet werden. Dadurch kann ein Blenden von nachfolgenden (fahrenden) Fahrzeugen verhindert werden. Die Beleuchtungseinheit kann sich vorzugsweise (nur) über einen Teilbereich der gesamten Breite des Nutzfahrzeugs und/oder des Lichtleiters erstrecken. Eine Beleuchtungseinheit kann dabei eine oder eine Vielzahl von (elektrischen) Lampen aufweisen, beispielsweise LED(s), OLED(s), Halogenlampen und/oder Xenonlampen. Dabei können mehrere Lampen (entlang einer Längserstreckung des Lichtleiters bzw. der Rücklichtvorrichtung) nebeneinander angeordnet sein. Es kann vorgesehen sein, dass die Lampen dimmbar ausgestaltet sind und/oder die Farbe des Lichts eingestellt werden kann. Es kann auch vorgesehen sein, dass diese in Abhängigkeit von einem Bewegungsmelder (der integriert ist) betrieben werden. Dadurch kann während eines Entladens und/oder Beladens eine konstante und/oder leicht betätigbare Beleuchtung bereitgestellt werden. Die Beleuchtungseinheit kann eine Höhe identisch zu dem Lichtleiter aufweisen. Vorzugsweise umfasst die Beleuchtungseinheit eine identische (Einbau-)Tiefe wie der Lichtleiter.

Im Rahmen der Erfindung kann es von Vorteil sein, dass die Rücklichtvorrichtung flach ausgestaltet ist und eine maximale Bautiefe, insbesondere entlang einer Fahrtrichtung, vorzugsweise des Nutzfahrzeugs, aufweist von weniger als 25 mm, insbesondere von weniger als 15 mm, vorzugsweise von weniger als 10 mm, idealerweise von weniger als 5 mm.

Es kann vorgesehen sein, dass die Bautiefe im Wesentlichen zwischen 15 mm und 25 mm aufweist. Dabei kann die Rücklichtvorrichtung und/oder der Lichtleiter, flach, flächig, und/oder streifenförmig ausgestaltet sein.

Im Rahmen der Erfindung ist es denkbar, dass der Lichtleiter drei, insbesondere gleich lange, Lichtleiterteile aufweist, umfassend einen linken Lichtleiterteil, einen rechten Lichtleiterteil und einen dazwischenliegenden mittleren Lichtleiterteil, insbesondere relativ zu einer Längserstreckung des Lichtleiterteils und/oder der Rücklichtvorrichtung (von rechts nach links).

Es kann auch vorgesehen sein, dass der Lichtleiter zweiteilig ausgestaltet ist. Eine Mehrteiligkeit kann dabei eine einfachere Fertigung und/oder Lagerung begünstigen. Dies kann auch die Umweltfreundlichkeit verbessern, da bei einem Defekt und/oder einer Wartung nur ein Teil ersetzt werden kann. Bevorzugt kann es sein, dass der Lichtleiter dreiteilig ausgestaltet ist. Es kann vorgesehen sein, dass die Lichtleiterteile separat an dem Nutzfahrzeug befestigt werden. Dadurch kann eine einfachere Montage ermöglicht werden. Es kann auch vorgesehen sein, dass die Lichtleiterteile (erst) aneinander befestigt werden, beispielsweise durch ein, insbesondere reversibel lösbares, Befestigungsmittel, beispielsweise eine Klickverbindung, welche beispielsweise an den aneinandergrenzenden Stirnseiten der Lichtleiterteile angeordnet sein können. Dadurch kann eine schnelle Montage und/oder ein modularer Ersatz ermöglicht werden. Vorzugsweise kann durch die Befestigungsmittel (zeitgleich und/oder parallel) eine elektronische Verbindung zwischen Lichtleiter(teilen) hergestellt werden, z. B. durch eine Stecker-Buchse Kombination. Es kann vorgesehen sein, dass der Lichtleiter und/oder die Lichtleiterteile an dem Nutzfahrzeug über ein oder mehrere (vorzugsweise entlang der Längserstreckung äquidistante) Befestigungseinheiten befestigt werden. Dabei können die Befestigungseinheiten eine oder mehrere Schraubverbindungen (z. B. mit [Lang-] Löchern in dem Lichtleiter und/oder Schrauben und/oder Gewinden in dem Nutzfahrzeug) aufweisen. Alternativ oder zusätzlich können die Befestigungseinheiten auch Nietverbindungen (insbesondere stabil), Klipsverbindungen (insbesondere reversibel lösbar) und/oder Klebeverbindungen (z. B. umfassend Epoxidharz, was insbesondere sehr robust ist) aufweisen. Vorzugsweise kann eine Befestigung in einer länglichen Vertiefung, Rille und/oder Nut des Nutzfahrzeugs erfolgen. Dadurch kann der Verschleiß insbesondere durch Witterung, insbesondere Wasser, reduziert werden. Vorzugsweise kann durch die Befestigungseinheiten (zeitgleich und/oder parallel) eine elektronische Verbindung zwischen Lichtleiter(teilen) und dem Nutzfahrzeug hergestellt werden, z. B. durch eine Stecker-Buchse Kombination. Es kann vorgesehen sein, dass der linke und rechte Lichtleiterteil an mittlerem Lichtleiterteil (bündig) anordbar, insbesondere befestigbar, sind, vorzugsweise über Befestigungsmittel. Dabei kann eine reversibel lösbare Verbindung besonders vorteilhaft sein. Dies kann die Montage und/oder Umweltfreundlichkeit verbessern. Eine Breite der Lichtleiterteile kann dabei der Hälfte oder einem Drittel der Breite des Lichtleiters entsprechen. Dadurch können die Lichtleiterteile einfacher hergestellt und/oder gelagert werden.

Es kann im Rahmen der Erfindung vorgesehen sein, dass die Beleuchtungseinheit bündig, insbesondere unterhalb, an und/oder auf dem Lichtleiter angeordnet, insbesondere befestigt, ist.

Eine bündige Anordnung kann dabei den Bauraum minimieren und/oder die Stabilität erhöhen. Dabei kann eine Anordnung neben, insbesondere unterhalb, des Lichtleiters eine einfache Montage. Eine Anordnung auf dem Lichtleiter kann dabei die Höhe der Rücklichtvorrichtung minimieren. Die Beleuchtungseinheit kann vorzugsweise für eine nach unten und/oder entlang (bzw. entgegen) der Höhenrichtung weisende Beleuchtung eingerichtet sein. Es kann vorgesehen sein, dass die Beleuchtungseinheit an dem Lichtleiter über ein oder mehrere (vorzugsweise entlang der Längserstreckung äquidistante) Befestigungseinheiten befestigt werden. Dabei können die Befestigungseinheiten eine oder mehrere Schraubverbindungen (z.B. mit [Lang-] Löchern in der Beleuchtungseinheit und/oder Schrauben und/oder Gewinden in dem Lichtleiter) aufweisen. Alternativ oder zusätzlich können die Befestigungseinheiten auch Nietverbindungen (insbesondere stabil), Klipsverbindungen (insbesondere reversibel lösbar) und/oder Klebeverbindungen (z. B. umfassend Epoxidharz, was insbesondere sehr robust ist) aufweisen. Vorzugsweise kann eine Befestigung in einer länglichen Vertiefung, Rille und/oder Nut des Lichtleiters erfolgen. Dadurch kann die Stabilität erhöht werden, und/oder der Verschleiß, insbesondere durch Witterung, insbesondere Wasser, reduziert werden. Vorzugsweise kann durch die Befestigungseinheiten (zeitgleich und/oder parallel) eine elektronische Verbindung (für Datenkommunikation und/oder Stromversorgung) zwischen Beleuchtungseinheit und dem Lichtleiter hergestellt werden, z. B. durch eine Stecker-Buchse Kombination. Dadurch kann die Beleuchtungseinheit über den Lichtleiter mit einer integrierten Steuereinheit und/oder einer elektronischen Steuereinheit des Nutzfahrzeugs verbunden werden. Vorzugsweise kann es vorgesehen sein, dass die Beleuchtungseinheit nach unten weisend ausgebildet ist. Dadurch kann die Beleuchtungsrichtung der Beleuchtungseinheit nach hinten und/oder unten, insbesondere Richtung Boden bzw. Arbeitsbereich orientiert sein. Vorteilhafterweise kann die Beleuchtungseinheit und/oder Beleuchtungsrichtung einstellbar sein, wobei insbesondere ein Winkel zwischen Höhenrichtung (vertikaler) und Beleuchtungseinrichtung eingestellt werden kann, beispielsweise manuell (händisch) und/oder über einen Aktuator, welcher über eine Datenverbindung und/oder Stromverbindung von der integrierten Steuereinheit und/oder elektronischen Steuereinheit des Nutzfahrzeugs angesteuert werden kann.

Es ist ferner denkbar, dass die Beleuchtungseinheit mittig, insbesondere unterhalb, an dem Lichtleiter, insbesondere dem mittleren Lichtleiterteil, angeordnet ist. Alternativ oder zusätzlich kann es vorgesehen sein, dass die Beleuchtungseinheit rechts und/oder links, insbesondere unterhalb, an dem Lichtleiter, insbesondere dem rechten Lichtleiterteil und/oder dem linken Lichtleiterteil, angeordnet ist.

Dadurch kann eine einzelne Beleuchtungseinheit einen großen Bereich am Boden, insbesondere symmetrisch abdecken. Es ist alternativ oder zusätzlich denkbar, dass eine linke und/oder rechte Beleuchtungseinheit vorgesehen ist. Diese kann wie oben für die Beleuchtungseinheit geschildert (analog) angeordnet werden. Durch die rechte und/oder linke Beleuchtungseinheit kann der beleuchtete Bereich vergrößert und/oder verschoben werden. Die linke und/oder rechte Beleuchtungseinheit kann vorzugsweise an und/oder auf dem linken und/oder rechten Lichtleiterteil angeordnet sein, insbesondere (bündig) unterhalb des Lichtleiter(teils). Bei einer mehrteiligen Ausführung können dabei vorteilhafterweise die unterschiedlichen Lichtleiterteile in Abhängigkeit von der gewünschten Anordnung der Beleuchtungseinheit aneinander anordbar sein.

Auch ist es denkbar, dass eine linke Blinklampe und eine rechte Blinklampe bündig (entlang der Höhenrichtung), insbesondere unterhalb, an und/oder auf dem Lichtleiter angeordnet sind.

Eine bündige Anordnung kann dabei den Bauraum minimieren und/oder die Stabilität erhöhen. Dabei kann eine Anordnung neben, insbesondere unterhalb, des Lichtleiters eine einfache Montage. Eine Anordnung auf dem Lichtleiter kann dabei die Höhe der Rücklichtvorrichtung minimieren. Die linke und/oder rechte Blinklampe kann vorzugsweise für ein Anzeigen einer Abbiegeabsicht eingerichtet sein. Es kann vorgesehen sein, dass die linke und/oder rechte Blinklampe an dem Lichtleiter über ein oder mehrere (vorzugsweise entlang der Längserstreckung äquidistante) Befestigungseinheiten befestigt werden. Dabei können die Befestigungseinheiten eine oder mehrere Schraubverbindungen (z. B. mit [Lang-] Löchern in der (linken und/oder rechten) Blinklampe und/oder Schrauben und/oder Gewinden in dem Lichtleiter) aufweisen. Alternativ oder zusätzlich können die Befestigungseinheiten auch Nietverbindungen (insbesondere stabil), Klipsverbindungen (insbesondere reversibel lösbar) und/oder Klebeverbindungen (z. B. umfassend Epoxidharz, was insbesondere sehr robust ist) aufweisen. Vorzugsweise kann eine Befestigung in einer länglichen Vertiefung, Rille und/oder Nut des Lichtleiters erfolgen. Dadurch kann die Stabilität erhöht werden, und/oder der Verschleiß, insbesondere durch Witterung, insbesondere Wasser, reduziert werden. Vorzugsweise kann durch die linke und/oder rechte Blinklampe (zeitgleich und/oder parallel) eine elektronische Verbindung (für Datenkommunikation und/oder Stromversorgung) zwischen linker und/oder rechter Blinklampe und dem Lichtleiter hergestellt werden, z. B. durch eine Stecker-Buchse Kombination. Dadurch kann die linke und/oder rechte Blinklampe über den Lichtleiter mit einer integrierten Steuereinheit und/oder einer elektronischen Steuereinheit des Nutzfahrzeugs verbunden werden.

Im Rahmen der Erfindung ist es optional möglich, dass
- die linke Blinklampe, insbesondere bündig, an einem linken Ende des Lichtleiters, insbesondere eines linken Lichtleiterteils, angeordnet ist, wodurch insbesondere die linke Blinklampe (im montierten Zustand) ganz links angeordnet sein kann,
- die rechte Blinklampe, insbesondere bündig, an einem rechten Ende des Lichtleiters, insbesondere eines rechten Lichtleiterteils, angeordnet ist, wodurch insbesondere die rechte Blinklampe (im montierten Zustand) ganz rechts angeordnet sein kann.

Ferner kann es im Rahmen der Erfindung vorgesehen sein, dass die Beleuchtungseinheit, insbesondere bezüglich einer Höhenrichtung der Rücklichtvorrichtung und/oder des Nutzfahrzeugs, verstellbar eingerichtet ist.

Dabei kann insbesondere der Winkel der Beleuchtungseinheit, beispielsweise über ein schwenkbares Gehäuse der Beleuchtungseinheit (relativ zu dem Nutzfahrzeug und/oder dem Lichtleiter), eingestellt werden. Dies erlaubt eine flexiblere und/oder einstellbare Anordnung und/oder Beleuchtung.

In Bezug auf die vorliegende Erfindung ist es vorstellbar, dass eine Bremslampe, insbesondere eine linke Bremslampe und eine rechte Bremslampe, bündig, insbesondere unterhalb, an und/oder auf dem Lichtleiter angeordnet sind.

Eine bündige Anordnung kann dabei den Bauraum minimieren und/oder die Stabilität erhöhen. Dabei kann eine Anordnung neben, insbesondere unterhalb, des Lichtleiters eine einfache Montage. Eine Anordnung auf dem Lichtleiter kann dabei die Höhe der Rücklichtvorrichtung minimieren. Die linke und/oder rechte Bremslampe kann vorzugsweise für ein Anzeigen einer Bremsbetätigung eingerichtet sein. Es kann vorgesehen sein, dass die linke und/oder rechte Bremslampe an dem Lichtleiter über ein oder mehrere (vorzugsweise entlang der Längserstreckung äquidistante) Befestigungseinheiten befestigt werden. Dabei können die Befestigungseinheiten eine oder mehrere Schraubverbindungen (z.B. mit [Lang-] Löchern in der (linken und/oder rechten) Bremslampe und/oder Schrauben und/oder Gewinden in dem Lichtleiter) aufweisen. Alternativ oder zusätzlich können die Befestigungseinheiten auch Nietverbindungen (insbesondere stabil), Klipsverbindungen (insbesondere reversibel lösbar) und/oder Klebeverbindungen (z. B. umfassend Epoxidharz, was insbesondere sehr robust ist) aufweisen. Vorzugsweise kann eine Befestigung in einer länglichen Vertiefung, Rille und/oder Nut des Lichtleiters erfolgen. Dadurch kann die Stabilität erhöht werden, und/oder der Verschleiß, insbesondere durch Witterung, insbesondere Wasser, reduziert werden. Vorzugsweise kann durch die linke und/oder rechte Bremslampe (zeitgleich und/oder parallel) eine elektronische Verbindung (für Datenkommunikation und/oder Stromversorgung) zwischen linker und/oder rechter Bremslampe und dem Lichtleiter hergestellt werden, z. B. durch eine Stecker-Buchse Kombination. Dadurch kann die linke und/oder rechte Bremslampe über den Lichtleiter mit einer integrierten Steuereinheit und/oder einer elektronischen Steuereinheit des Nutzfahrzeugs verbunden werden.

Ferner ist es vorstellbar, dass die Bremslampe bündig neben der linken Blinklampe und/oder rechten Blinklampe angeordnet ist, wobei insbesondere
- die Bremslampe eine linke Bremslampe aufweist, die bündig rechts, unterhalb und/oder oberhalb von der linken Blinklampe angeordnet ist,
- die Bremslampe eine rechte Bremslampe aufweist, die bündig links, unterhalb und/oder oberhalb von der rechten Blinklampe angeordnet ist.

Dadurch können die linke Bremslampe und die linke Blinklampe einen (modularen) Baublock bilden, welcher insbesondere gemeinsam (aneinander) vormontiert und/oder (an den Lichtleiter) montiert werden kann. Dies kann die Montage, Wartung und/oder Umweltfreundlichkeit verbessern. Es kann vorgesehen sein, dass die linke und/oder rechte Bremslampe an der linken und/oder rechten Blinklampe über ein oder mehrere (vorzugsweise entlang der Höhenrichtung äquidistante) Befestigungseinheiten befestigt werden. Dabei können die Befestigungseinheiten eine oder mehrere Schraubverbindungen (z. B. mit [Lang-] Löchern in der der (linken und/oder rechten) Blinklampe (oder Bremslampe) und/oder Schrauben und/oder Gewinden in dem jeweiligen Gegenstück) aufweisen. Alternativ oder zusätzlich können die Befestigungseinheiten auch Nietverbindungen (insbesondere stabil), Klipsverbindungen (insbesondere reversibel lösbar) und/oder Klebeverbindungen (z. B. umfassend Epoxidharz, was insbesondere sehr robust ist) aufweisen.

Vorzugsweise kann eine Befestigung in einer länglichen Vertiefung, Rille und/oder Nut der der (linken und/oder rechten) Blinklampe (oder Bremslampe) erfolgen. Dadurch kann die Stabilität erhöht werden, und/oder der Verschleiß, insbesondere durch Witterung, insbesondere Wasser, reduziert werden.

Im Rahmen der Erfindung kann es von Vorteil sein, dass der Lichtleiter, insbesondere der mittlere Lichtleiterteil, der linke Lichtleiterteil und/oder der rechte Lichtleiterteil, symmetrisch ausgestaltet ist, bezüglich
- einer (mittig angeordneten) Ebene senkrecht zu einer Längserstreckung des Lichtleiters, und/oder
- einer (mittig angeordneten) Ebene, die durch die Längserstreckung des Lichtleiters und eine Fahrtrichtung des Nutzfahrzeugs definiert wird.

Dadurch kann eine einfachere Fertigung und/oder Montage ermöglicht werden.

Es kann vorgesehen sein, dass die Rücklichtvorrichtung, symmetrisch ausgestaltet ist, bezüglich
- einer (mittig angeordneten) Ebene senkrecht zu einer Längserstreckung des Lichtleiters, und/oder
- einer (mittig angeordneten) Ebene die durch die Längserstreckung des Lichtleiters und eine Fahrtrichtung des Nutzfahrzeugs definiert wird.

Dadurch kann eine einfachere Fertigung und/oder Montage ermöglicht werden.

Im Rahmen der Erfindung ist es denkbar, dass der Lichtleiter, insbesondere der linke Lichtleiterteil, der rechte Lichtleiterteil und/oder der mittlere Lichtleiterteil, dazu eingerichtet ist bezüglich einer Längserstreckung des Lichtleiters, insbesondere in einer Ebene senkrecht zu einer Fahrtrichtung des Nutzfahrzeugs, wahlweise in einem von zumindest zwei verschiedenen Winkeln an dem Nutzfahrzeug angeordnet zu werden.

Dabei können die zumindest zwei Winkel spezifisch sein für eine Drehung von 0° und 180°. Dabei kann aufgrund der (oben beschriebenen) Symmetrie eine Anordnung in den zumindest zwei Winkeln ermöglicht werden. Dabei können vorzugsweise die Blinker, Bremslampen und/oder Beleuchtungseinheit(en) entsprechend symmetrisch angeordnet sein.

Es kann im Rahmen der Erfindung vorgesehen sein, dass eine, insbesondere nach hinten weisende, Oberfläche und/oder Schicht unterhalb der (vorzugsweise zumindest teilweise transparenten) Oberfläche des Lichtleiters reflektierend (insbesondere retroreflektierend) ausgestaltet ist.

Dabei kann Licht, welches (entlang der Fahrtrichtung) von hinten, beispielsweise von einem nachfolgenden Fahrzeug, auf die Rücklichtvorrichtung trifft, zumindest teilweise reflektiert werden. Somit kann eine passive Beleuchtung und/oder Warnfunktion realisiert werden. Es kann dabei vorgesehen sein, dass dafür ein Reflektor vorgesehen ist, welcher vorzugsweise bündig, flächig und/oder deckend an und/oder auf dem Lichtleiter angeordnet ist, insbesondere irreversibel befestigt ist, beispielsweise aufgeklebt und/oder verschweißt. Dabei kann der Reflektor prismatische Elemente aufweisen. Es kann vorgesehen sein, dass der Reflektor zumindest teilweise durch den oder die Blinker, Bremslichter und/oder Beleuchtungseinheit verdeckt ist. Alternativ oder zusätzlich kann es vorgesehen sein, dass der oder die Blinker, Bremslichter und/oder Beleuchtungseinheit (selbst) zumindest teilweise transparent ausgestaltet sind, wodurch vorteilhafterweise der (darunterliegende) Reflektor auch zu Reflektionen an den (eigentlich durch die vorbenannten Bauteile) verdeckten Stellen ermöglicht. Der Reflektor kann folienartig, flach und/oder flächig ausgestaltet sein.

Der oder die Blinker, Bremslichter und/oder Beleuchtungseinheit können als Optikbausteine ausgestaltet sein. Es ist denkbar, dass der oder die Blinker, Bremslichter und/oder Beleuchtungseinheit (lediglich) als Strahlformer ausgestaltet sind, und Licht, welches von der Leuchtleiste erzeugt wird entsprechend leiten und/oder reflektieren um dadurch eine Funktion als Blinker, Bremslicht und/oder Beleuchtungseinheit zu realisieren. Dabei kann es vorgesehen sein, dass die Lichtleiste, insbesondere die einzelnen Lampen und/oder entsprechende Gruppen von Lampen, einzeln angesteuert werden können.

Es ist ferner denkbar, dass eine, insbesondere nach hinten weisende, Oberfläche des Lichtleiters beleuchtet ausgestaltet ist.

Es ist dabei denkbar, dass die Oberfläche (bzw. eine zusätzlich [auf dem Lichtleiter] obenliegende Schicht) eine (zusätzliche) Beleuchtungsfunktion, beispielsweise durch eine Leiterfolie, bereitstellt. Dabei kann die Oberfläche zumindest teilweise transparent ausgestaltet sein. Dadurch kann eine superponierte Beleuchtung bereitgestellt werden. Dabei wäre beispielsweise eine Notwarnfunktion realisierbar. Beispielsweise kann ein Blinklicht generiert werden, wenn die Warnblinkanlage angeschaltet wird. Diese ist, dann insbesondere bei einer Anordnung im oberen Bereich des Nutzfahrzeugs gut sichtbar, beispielsweise über ein Stauende hinweg. Es kann auch vorgesehen sein, dass ein besonders starkes Bremsen zu einem derartigen (warnenden) Betreiben führt. Dies kann jeweils über die integrierte Steuereinheit und/oder die elektronische Steuereinheit des Nutzfahrzeugs (durch Ansteuern mit einem entsprechenden Steuersignal über eine Datenverbindung) initiiert werden.

Die obenstehende Aufgabe wird gemäß einem zweiten Aspekt gelöst durch ein erfindungsgemäßes Nutzfahrzeug, umfassend eine Rücklichtvorrichtung nach dem ersten Aspekt.

Ein Nutzfahrzeug kann einen Lastkraftwagen, einen Anhänger oder Sattelauflieger aufweisen. Ein Nutzfahrzeug kann beispielsweise einen Kofferaufbau oder kofferartigen Aufbau aufweisen, welcher einen Laderaum umgibt und/oder bildet. Dieser kann beispielsweise durch eine Heckklappe oder Tür beladen und/oder entladen werden.

Damit ergeben sich in Bezug auf ein erfindungsgemäßes Nutzfahrzeug die gleichen Vorteile, wie sie bereits in Bezug auf eine erfindungsgemäße Rücklichtvorrichtung beschrieben worden sind.

Auch ist es bevorzugt denkbar, dass die Rücklichtvorrichtung im Heckbereich des Nutzfahrzeugs am oberen Ende des Nutzfahrzeugs angeordnet ist.

Vorzugsweise kann dabei die Rücklichtvorrichtung oberhalb einer Heckklappe, Tür und/oder Ladeöffnung des Nutzfahrzeugs, insbesondere des Kofferaufbaus, angeordnet sein. Vorzugsweise bedeckt die Rücklichtvorrichtung dabei im Wesentlichen die gesamte (verfügbare) Höhe und/oder Breite entlang der Höhenrichtung und/oder Längserstreckung, insbesondere des Kofferaufbaus und/oder eines Rahmens des Kofferaufbaus.

Es kann vorgesehen sein, dass die Rücklichtvorrichtung zusätzlich zu weiteren Rücklichtvorrichtungen und/oder Lampen vorgesehen ist. Dadurch kann die Sicherheit erhöht werden. Alternativ kann es vorgesehen sein, dass die Rücklichtvorrichtung alternativ zu weiteren Rücklichtvorrichtungen und/oder Lampen vorgesehen ist, beispielsweise bei Sonderfahrzeugen, etwa Müllfahrzeugen, Baufahrzeugen und dergleichen. Dadurch kann die Sicherheit erhöht werden und/oder der darunterliegende Bereich für andere technische Vorrichtungen, z. B. Hebevorrichtungen, freigehalten werden.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Dabei zeigen beispielhaft jeweils schematisch:
- Figur 1: eine Rücklichtvorrichtung
- Figur 2: eine Rücklichtvorrichtung
- Figur 3: eine Rücklichtvorrichtung und
- Figur 4: ein Nutzfahrzeug.

In den nachfolgenden Figuren werden für die gleichen technischen Merkmale, auch von unterschiedlichen Ausführungsbeispielen, die identischen Bezugszeichen verwendet.

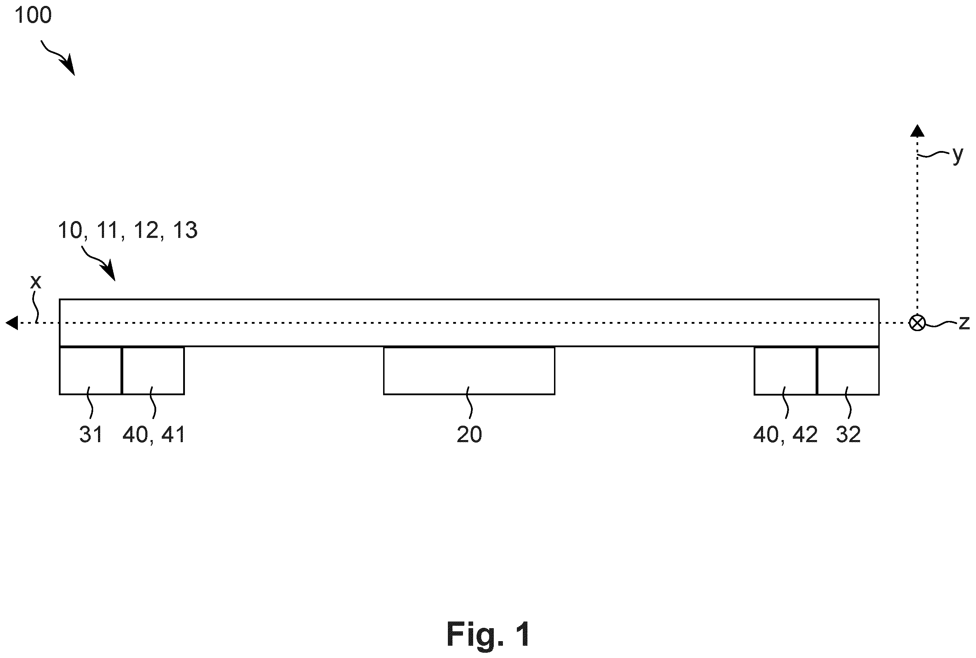

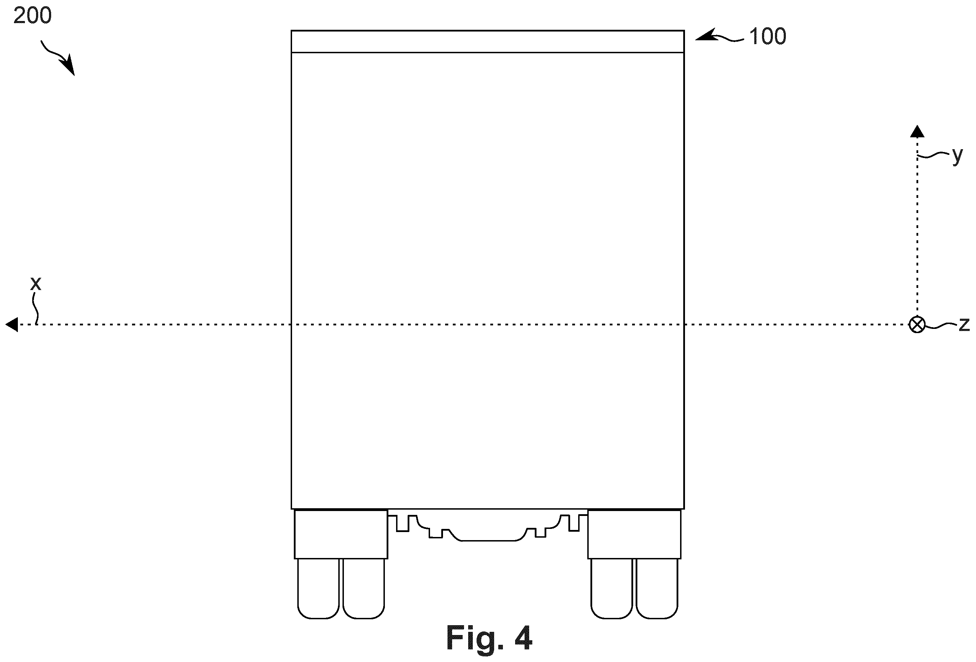

Fig. 1 zeigt beispielhaft eine Rücklichtvorrichtung 100 für ein Nutzfahrzeug 200, insbesondere einen Lastkraftwagen, Anhänger oder Sattelauflieger, welche für ein Beleuchten im Heckbereich eingerichtet ist, aufweisend:
- einen Lichtleiter 10, der dazu eingerichtet ist, im Heckbereich über die gesamte Breite eines Nutzfahrzeugs 200 angeordnet zu werden (vgl. Fig. 4),
- eine Beleuchtungseinheit 20, die zum Beleuchten eines am Boden befindlichen Arbeitsbereichs im Heckbereich des Nutzfahrzeugs 200 eingerichtet ist,
- eine linke Blinklampe 31 und eine rechte Blinklampe 32,
- eine Bremslampe 40.

Im Rahmen der Erfindung kann es von Vorteil sein, dass die Rücklichtvorrichtung 100 flach ausgestaltet ist und eine maximale Bautiefe, insbesondere entlang einer Fahrtrichtung z des Nutzfahrzeugs 200, aufweist von weniger als 25 mm. Dabei können die Fahrtrichtung z, die Längserstreckung x und die Höhenrichtung y ein Rechthandsystem bilden.

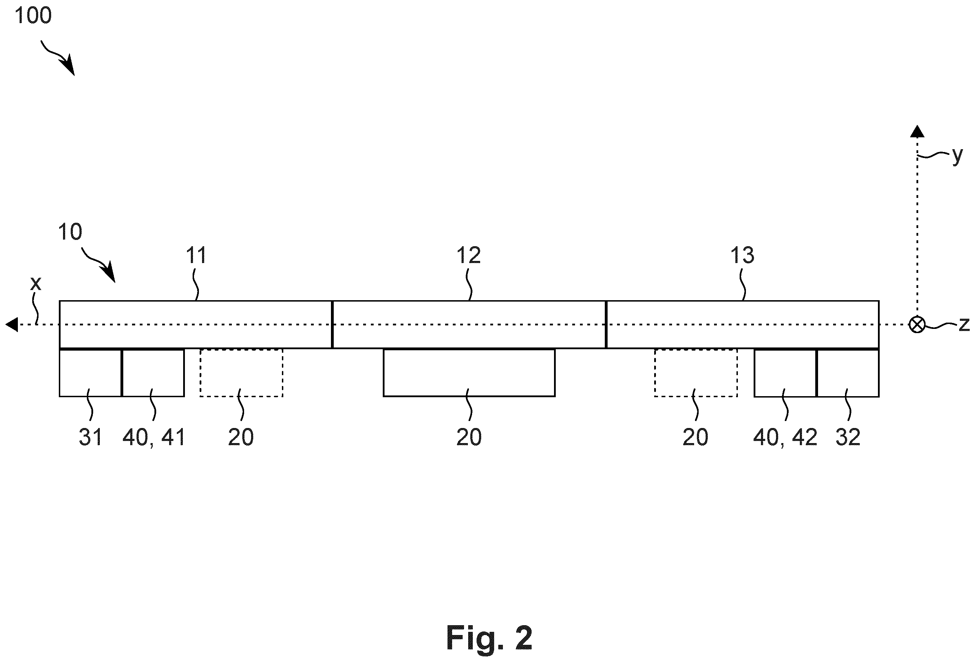

Fig. 2 zeigt beispielhaft (in Anlehnung an Fig. 1), dass der Lichtleiter 10 drei, insbesondere gleich lange, Lichtleiterteile 11, 12, 13 aufweist, umfassend einen linken Lichtleiterteil 11, einen rechten Lichtleiterteil 13 und einen dazwischenliegenden mittleren Lichtleiterteil 12.

Es kann im Rahmen der Erfindung vorgesehen sein, dass die Beleuchtungseinheit 20 bündig, insbesondere unterhalb, an dem Lichtleiter 10, angeordnet ist.

Es ist ferner denkbar, dass die Beleuchtungseinheit 20 mittig, insbesondere unterhalb, an dem Lichtleiter 10, insbesondere dem mittleren Lichtleiterteil 12, angeordnet ist. Alternativ oder zusätzlich kann die Beleuchtungseinheit 20 (gestrichelt dargestellt) auch links und/oder rechts, insbesondere (im Wesentlichen) mittig, z. B. unterhalb des Lichtleiters, bzw. dem linken und/oder rechten Lichtleiterteil 11, 13 angeordnet sein.

Auch ist es denkbar, dass die linke Blinklampe 31 und die rechte Blinklampe 32 bündig, insbesondere unterhalb, an dem Lichtleiter 10 angeordnet sind.

Im Rahmen der Erfindung ist es optional möglich, dass
- die linke Blinklampe 31, insbesondere bündig, an einem linken Ende des Lichtleiters 10, insbesondere eines linken Lichtleiterteils 11, angeordnet ist,
- die rechte Blinklampe 32, insbesondere bündig, an einem rechten Ende des Lichtleiters 10, insbesondere eines rechten Lichtleiterteils 13, angeordnet ist.

Ferner kann es im Rahmen der Erfindung vorgesehen sein, dass die Beleuchtungseinheit 20, insbesondere bezüglich einer Höhenrichtung y der Rücklichtvorrichtung 100 und/oder des Nutzfahrzeugs 200, verstellbar eingerichtet ist.

In Bezug auf die vorliegende Erfindung ist es vorstellbar, dass die Bremslampe 40, insbesondere eine linke Bremslampe 41 und eine rechte Bremslampe 42, bündig, insbesondere unterhalb, an dem Lichtleiter 10 angeordnet sind.

Ferner ist es vorstellbar, dass die Bremslampe 40 bündig neben der linken Blinklampe 31 und/oder rechten Blinklampe 32 angeordnet ist, wobei insbesondere
- die Bremslampe 40 eine linke Bremslampe 41 aufweist, die bündig rechts von der linken Blinklampe 31 angeordnet ist,
- die Bremslampe 40 eine rechte Bremslampe 42 aufweist, die bündig links von der rechten Blinklampe 32 angeordnet ist.

Im Rahmen der Erfindung kann es von Vorteil sein, dass der Lichtleiter 10 symmetrisch ausgestaltet ist, bezüglich
- einer Ebene senkrecht zu einer Längserstreckung x des Lichtleiters 10, und/oder
- einer Ebene, die durch die Längserstreckung x des Lichtleiters 10 und eine Fahrtrichtung z definiert wird.

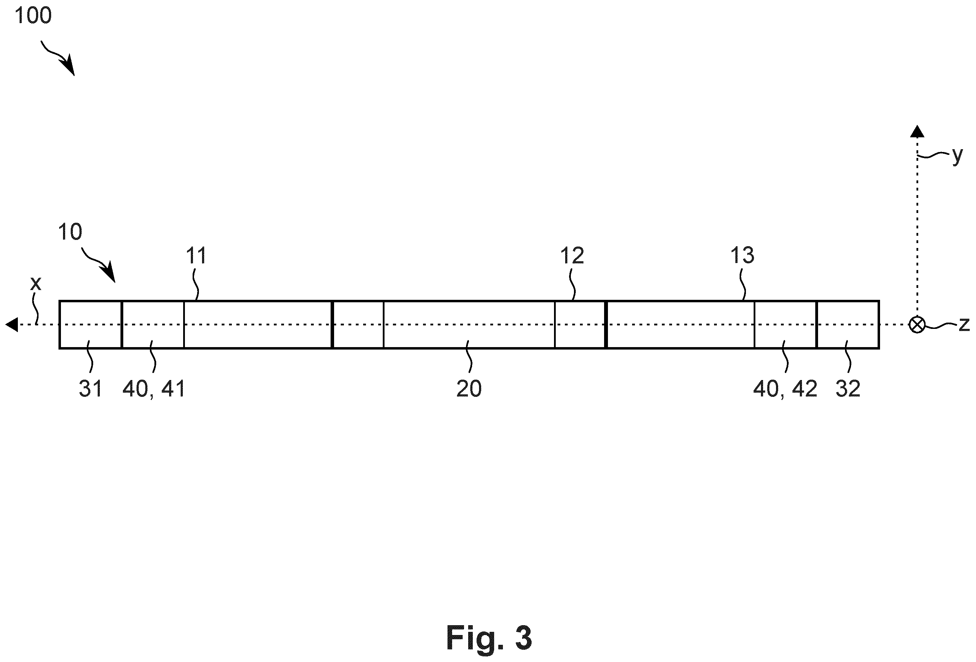

Dabei ist beispielhaft in Fig. 1, Fig. 2 und Fig. 3 der Lichtleiter 10 jeweils symmetrisch bezüglich einer Ebene, welche (mittig von dem Lichtleiter 10) durch die Fahrtrichtung z und die Höhenrichtung y definiert (bzw. aufgespannt) wird. In Fig. 3 ist die Rücklichtvorrichtung 100 (auch) punktsymmetrisch, insbesondere bezüglich eines Mittelpunkts des Lichtleiters 10, welcher in einer Ebene liegt, welche durch die Längserstreckung x und die Höhenrichtung y definiert (bzw. aufgespannt) wird. Dadurch kann (jeweils) eine flexible(re) Anordnung bzw. Befestigung an einem Nutzfahrzeug erfolgen. Zudem kann eine vereinfachte Herstellung, Montage und/oder Wartung erfolgen.

Im Rahmen der Erfindung ist es denkbar, dass der Lichtleiter 10, insbesondere der linke Lichtleiterteil 11, der rechte Lichtleiterteil 13 und/oder der mittlere Lichtleiterteil 12, dazu eingerichtet ist bezüglich einer Längserstreckung x des Lichtleiters 10, insbesondere in einer Ebene senkrecht zu einer Fahrtrichtung z des Nutzfahrzeugs 200, wahlweise in einem von zumindest zwei verschiedenen Winkeln an dem Nutzfahrzeug 200 angeordnet zu werden.

Es kann im Rahmen der Erfindung vorgesehen sein, dass eine, insbesondere nach hinten weisende, Oberfläche des Lichtleiters 10 reflektierend ausgestaltet ist. Beispielsweise kann ein Reflektieren von Licht in Fig. 1, Fig. 2 und/oder Fig. 3 jeweils aus der Blattebene heraus erfolgen, beispielsweise in Richtung eines nachfolgenden Fahrzeugs.

Es ist ferner denkbar, dass eine, insbesondere nach hinten weisende, Oberfläche des Lichtleiters 10 beleuchtet ausgestaltet ist.

Fig. 3 zeigt beispielhaft, insbesondere in Anlehnung an Fig. 2, eine Rücklichtvorrichtung 100 mit drei Lichtleiterteilen 11, 12, 13. Dabei sind die linke und rechte Bremslampe 40, 41, 42 und die linke und rechte Blinklampe 31, 32 sowie die Beleuchtungseinheit 20 bündig auf dem Lichtleiter 10 bzw. dem linken, mittleren und rechten Lichtleiter 11, 12, 13 angeordnet. Dadurch kann der Bauraum bzw. die Höhe entlang der Höhenrichtung y reduziert werden. Zudem können eine Überlagerung bzw. ein kombiniertes Betreiben (Beleuchten) des Lichts in den Überdeckungsbereichen ermöglicht werden.

Fig. 4 zeigt beispielhaft ein Nutzfahrzeug 200 (von hinten), umfassend eine Rücklichtvorrichtung 100, wie beispielsweise in Fig. 1, Fig. 2 und/oder Fig. 3 dargestellt.

Dabei ist es denkbar, dass die Rücklichtvorrichtung 100 im Heckbereich des Nutzfahrzeugs 200 am oberen Ende des Nutzfahrzeugs 200 angeordnet ist, vorliegend beispielsweise am obersten Ende entlang der Höhenrichtung y. Dadurch kann die Sicherheit, Robustheit und/oder Verschleiß optimiert werden.

### Bezugszeichenliste

- 10: Lichtleiter
- 11, 12, 13: Lichtleiterteile
- 11: linker Lichtleiterteil
- 12: mittlerer Lichtleiterteil
- 13: rechter Lichtleiterteil
- 20: Beleuchtungseinheit
- 31: linke Blinklampe
- 32: rechte Blinklampe
- 40: Bremslampe
- 41: linke Bremslampe
- 42: rechte Bremslampe
- 100: Rücklichtvorrichtung
- 200: Nutzfahrzeug
- x: Längserstreckung
- y: Höhenrichtung
- z: Fahrtrichtung

## Patentansprüche

1. Rücklichtvorrichtung (100) für ein Nutzfahrzeug (200), insbesondere einen Lastkraftwagen, Anhänger oder Sattelauflieger, welche für ein Beleuchten im Heckbereich eingerichtet ist, aufweisend:
- einen Lichtleiter (10), der dazu eingerichtet ist, im Heckbereich über die gesamte Breite eines Nutzfahrzeugs (200) angeordnet zu werden,
- eine Beleuchtungseinheit (20), die zum Beleuchten eines am Boden befindlichen Arbeitsbereichs im Heckbereich des Nutzfahrzeugs (200) eingerichtet ist.

2. Rücklichtvorrichtung (100) nach Anspruch 1,
**dadurch gekennzeichnet,**
**dass** die Rücklichtvorrichtung (100) flach ausgestaltet ist und eine maximale Bautiefe, insbesondere entlang einer Fahrtrichtung (z), insbesondere des Nutzfahrzeugs (200), aufweist von weniger als 25 mm.

3. Rücklichtvorrichtung (100) nach Anspruch 1 oder 2,
**dadurch gekennzeichnet,**
**dass** der Lichtleiter (10) drei, insbesondere gleich lange, Lichtleiterteile (11, 12, 13) aufweist, umfassend einen linken Lichtleiterteil (11), einen rechten Lichtleiterteil (13) und einen dazwischenliegenden mittleren Lichtleiterteil (12).

4. Rücklichtvorrichtung (100) nach einem der vorhergehenden Ansprüche,
**dadurch gekennzeichnet,**
**dass** die Beleuchtungseinheit (20) bündig, insbesondere unterhalb, an dem Lichtleiter (10) angeordnet ist.

5. Rücklichtvorrichtung (100) nach einem der vorhergehenden Ansprüche,
**dadurch gekennzeichnet,**
**dass** die Beleuchtungseinheit (20)
- mittig, insbesondere unterhalb, an dem Lichtleiter (10), insbesondere dem mittleren Lichtleiterteil (12), angeordnet ist, und/oder
- rechts und/oder links, insbesondere unterhalb, an dem Lichtleiter (10), insbesondere dem rechten Lichtleiterteil (13) und/oder dem linken Lichtleiterteil (11), angeordnet ist.

6. Rücklichtvorrichtung (100) nach einem der vorhergehenden Ansprüche, **dadurch gekennzeichnet,**
**dass** eine linke Blinklampe (31) und eine rechte Blinklampe (32) vorgesehen sind, welche bündig, insbesondere unterhalb, an dem Lichtleiter (10) angeordnet sind, wobei
- die linke Blinklampe (31), insbesondere bündig, an einem linken Ende des Lichtleiters (10), insbesondere eines linken Lichtleiterteils (11), angeordnet ist,
- die rechte Blinklampe (32), insbesondere bündig, an einem rechten Ende des Lichtleiters (10), insbesondere eines rechten Lichtleiterteils (13), angeordnet ist.

7. Rücklichtvorrichtung (100) nach einem der vorhergehenden Ansprüche, **dadurch gekennzeichnet,**
**dass** die Beleuchtungseinheit (20), insbesondere bezüglich einer Höhenrichtung (y) der Rücklichtvorrichtung (100) und/oder des Nutzfahrzeugs (200), verstellbar eingerichtet ist.

8. Rücklichtvorrichtung (100) nach Anspruch 6,
**dadurch gekennzeichnet,**
**dass** eine Bremslampe (40) bündig neben der linken Blinklampe (31) und/oder rechten Blinklampe (32) angeordnet ist, wobei insbesondere
- die Bremslampe (40) eine linke Bremslampe (41) aufweist, die bündig rechts von der linken Blinklampe (31) angeordnet ist,
- die Bremslampe (40) eine rechte Bremslampe (42) aufweist, die bündig links von der rechten Blinklampe (32) angeordnet ist.

9. Rücklichtvorrichtung (100) nach einem der vorhergehenden Ansprüche, **dadurch gekennzeichnet,**
**dass** der Lichtleiter (10) symmetrisch ausgestaltet ist, bezüglich
- einer Ebene senkrecht zu einer Längserstreckung (x) des Lichtleiters (10), und/oder
- einer Ebene die durch die Längserstreckung (x) des Lichtleiters (10) und eine Fahrtrichtung (z), insbesondere des Nutzfahrzeugs (200), definiert wird.

10. Rücklichtvorrichtung (100) nach einem der vorhergehenden Ansprüche, **dadurch gekennzeichnet,**
**dass** der Lichtleiter (10), insbesondere der linke Lichtleiterteil (11), der rechte Lichtleiterteil (13) und/oder der mittlere Lichtleiterteil (12), dazu eingerichtet ist bezüglich einer Längserstreckung (x) des Lichtleiters (10), insbesondere in einer Ebene senkrecht zu einer Fahrtrichtung (z) des Nutzfahrzeugs (200), wahlweise in einem von zumindest zwei verschiedenen Winkeln an dem Nutzfahrzeug (200) angeordnet zu werden.

11. Rücklichtvorrichtung (100) nach einem der vorhergehenden Ansprüche, **dadurch gekennzeichnet,**
**dass** eine, insbesondere nach hinten weisende, Oberfläche des Lichtleiters (10) reflektierend ausgestaltet ist.

12. Rücklichtvorrichtung (100) nach einem der vorhergehenden Ansprüche, **dadurch gekennzeichnet,**
**dass** eine, insbesondere nach hinten weisende, Oberfläche des Lichtleiters (10) beleuchtet ausgestaltet ist.

13. Nutzfahrzeug (200) umfassend eine Rücklichtvorrichtung (100) nach einem der vorhergehenden Ansprüche.

14. Nutzfahrzeug (200) nach dem vorhergehenden Anspruch,
**dadurch gekennzeichnet,**
**dass** die Rücklichtvorrichtung (100) im Heckbereich des Nutzfahrzeugs (200) am oberen Ende des Nutzfahrzeugs (200) angeordnet ist.
